# EUROPEAN PATENT APPLICATION

(11) **EP 3 013 012 A1**
(43) Date of publication of application: **27.04.2016**
(21) Application number: 14290317.8
(22) Date of filing: 21.10.2014
(51) Int. Cl.: H04L 29/06

(54) **Networking device and method for adapting quality of video bitstreaming over a network**

(71) Applicant: ALCATEL LUCENT, 92100 Boulogne-Billancourt (FR)
(72) Inventor: Tang, M Siyu, 2018 Antwerp (BE); Rondao Alface, Patrice, 2018 Antwerp (BE); Vermoesen, Luc, 2018 Antwerp (BE)
(74) Representative: Plas, Axel Ivo Michel

(57) **Abstract**

According to a first aspect, the invention relates to a networking device (100) for adapting quality of video bitstreaming over a network (400). The device (100) comprises an analyser (200) configured to detect one or more low priority regions and/or one or more high priority regions in video frames of a video bitstream. The analyser (200) is configured to determine one or more low priority video sub-bitstreams corresponding to the one or more detected low priority regions and/or configured to determine one or more high priority video sub-bitstreams corresponding to the one or more detected high priority regions. The device (100) further comprises a quality controller (203) configured to detect network congestion and configured to decrease or increase quality of the one or more low priority video sub-bitstreams depending on respectively degrading or improved network congestion. The device (100) further comprises a network interface (350) for sending the one or more high priority video sub-bitstreams and/or the one or more low priority video sub-bitstreams via one or more network paths over a network (400) to a receiver.

## Description

### Technical Field

The disclosure relates to the field of network devices that adapt quality of video bitstreaming over a network via a network interface, more particularly interactive and/or real-time video bitstreaming implementing control schemes to adapt to network congestion between a receiver and a sender.

### Background

Interactive and/or real-time communication is expected to be an important service in the next generation of multimedia delivery over a network (e.g. the Internet). A fundamental characteristic of today's real-time video conferencing traffic (e.g. Skype, Facetime, WebRTC, webcasting) is to share the same queue with a variety of Internet traffic, e.g. Web requests, bulk data transfer, adaptive streaming over HTTP, or other types of real-time flows. In best-effort networking, network congestion (e.g. network delay, jitter, packet loss, etc.) is a well-known phenomenon whereby excessive traffic is competing for a bottleneck link.

A problem is that stringent latency requirements have to be met, typically a few hundreds of milliseconds. Due to late or lost packets, interactivity and a smooth viewing experience at the receiving device may be impaired.

Different solutions have been proposed to alleviate the above problem.

A first solution is rate adaptation on the receiver or sender side with respect to the video and/or audio packets being delivered. In general, a rate adaptation algorithm should be able to detect and avoid congestion at its early phase. Meanwhile, it should also be able to recover from network congestion, which is typically indicated by packet losses. To achieve congestion avoidance, the sending rate is adjusted accordingly by constantly monitoring the packet inter-arrival time. To recover from congestion, the sending rate can be adapted as a function of packet loss rate, round-trip-time (RTT), maximum flow packet size, TCP retransmission timeout value, etc. The corresponding algorithm is referred to as "TCP friendly rate control (TFRC)".

A second solution is to adapt estimated bandwidth by a receiver-based rate control scheme according to the timing of the received frames, whereby a sender-based rate controller, can adapt the sending rate according to different levels of packet loss rate, and limited by the aforementioned TFRC algorithm as well as the receiver-estimated available bandwidth.

### Summary

A problem of the existing solutions is a need for a better differentiation in quality of service in view of network congestion or inferior/variable network connection.

In order to alleviate (or avoid) network congestion, an efficient congestion control scheme is needed for video bitstreaming, e.g. interactive applications over the Web. There is a need to reduce (or avoid) packet loss and network delay and/or jitter along the congested network path, together with the provision of a smooth viewing experience at the receiver or end-user.

This object is achieved, in a first aspect, by a networking device for adapting quality of video bitstreaming over a network, the networking device comprising:
- an analyser configured to detect one or more low priority regions and/or one or more high priority regions in video frames of a video bitstream, wherein the analyser is configured to determine one or more low priority video sub-bitstreams corresponding to the one or more detected low priority regions and/or to determine one or more high priority video sub-bitstreams corresponding to the one or more detected high priority regions;
- a quality controller configured to detect network congestion and configured to decrease or increase quality of the one or more low priority video sub-bitstreams depending on respectively degrading or improved network congestion;
- a network interface for sending the one or more high priority video sub-bitstreams and/or the one or more low priority video sub-bitstreams via one or more network paths over a network to a receiver.

An advantageous aspect is that embodiments of the invention allow for differentiation of object importance in a video scene. For example, a video conferencing scene is typically composed of a static background and one or more regions of interest (e.g. a talking person in the front). For the end-user, the objects of interest are more important than the background area (or regions that are not of major interest to the end-user), certainly in case of bandwidth scarcity or video quality degradation.

Different objects or regions in corresponding video frames can have different priority from a user experience point of view. By detecting one or more high priority regions or 'regions of interest' and by first decreasing quality of one or more low priority regions in video bitstreams (e.g. background), while maintaining quality for the one or more high priority regions, a better and more reasonable quality of video bitstreaming will be perceived at the receiver by the end-user in case of occurring network congestion or inferior network connection compared to prior art. As an alternative to maintaining quality, the quality for the one or more high priority regions could also be increased, or, decreased to a smaller extent than the quality for the one or more low priority regions.

Existing real-time communication tools typically encode a complete scene as a video frame for further packetization and transport. This encoding of an entire video frame with the same bit-rate imposes limitations, which can be reduced by adapting the quality (and consequently sending rate) of different objects in a scene separately. Quality adaptation can be content-based. Instead of increasing or decreasing the sending rate of the entire video frame while ignoring the importance of different regions in a video frame, when network congestion or bandwidth fluctuation occurs, e.g. first the quality of the background can be decreased while a reasonable viewing experience at the objects of interest can be maintained. A low resolution in the background has lesser impact on the user's quality of experience (QoE) compared to a degraded quality of an object of interest, e.g. a talking person's face.

The term "networking device" in underlying disclosure should be understood as a computing device or computer which is provided with a network interface for communicating with one or more other devices via a network. Possible implementations of the networking device could comprise a computer, server, a router, a switch, a modem, a portable device, a mobile phone, a tablet computer, etc.).

The term "priority region" in underlying disclosure should be understood as region, area, collection of areas in a video frame with a certain associated priority. A high priority region could e.g. correspond to a talking person, while a low priority region could correspond to a static background.

The term "video bitstream" in underlying disclosure should be understood as video data, frames or packets which are continuously and subsequently provided to the networking device for adaptation. Such data could be delivered in raw format, as well as in an encoded format, which e.g. the network device could transcode or transrate for further processing. One example could be captured video data which is provided in real-time to the networking device, e.g. live video streaming, interactive conferences, webcam streaming, etc. Another example could be the streaming of a recorded and stored movie. A video bitstream can relate to asynchronous video conversations, e.g. webinars, meeting recordings, online workshops, etc. Herein, video data is recorded and stored during a certain period, which video data can be viewed later and therefore be streamed over the network at a later instance.

The term "video sub-bitstream" in underlying disclosure should be understood as a partial bitstream of the video bitstream, wherein video data, frames or packets of the sub-bitstream comprise partial information of the video bitstream. In a preferred embodiment, video sub-bitstream corresponds to video data of a certain priority region.

The term "quality of a video sub-bitstream" in underlying disclosure should be understood as the remaining quality of video frames or packets after adaptation by the quality controller. The quality can be dependent on QoS (Quality of Service), an encoding level, spatial resolution, bitrate, PSNR (Peak Signal-to-Noise Ratio), QoE, etc.

The term "sending a video sub-bitstream over a network" in underlying disclosure should be understood as providing or distributing packets or frames corresponding to a video sub-bitstream over a network. Typically the packets are transported according to a standardized real-time media delivering protocol, such as e.g. "Real-time Transport Protocol" (RTP), "Real Data Transport" (RDT), "Real Time Streaming Protocol" (RTSP), H.323, "Session Initiation Protocol" (SIP), MPEG media transport (MMT), etc.

The term "receiver" in underlying disclosure should be understood as a device enabled to receive and buffer the video sub-bitstream data. The receiver is able to combine the video sub-bitstreams into a video bitstream. Preferably, the receiver is able to play the combined video bitstream together with a received audio stream accompanying the video bitstream. The received media (video and/or audio) can be played immediately without downloading the whole video and/or audio stream.

The term "network path" in underlying disclosure should be understood as a temporally link or connection between the networking device and a receiver. The connection is subject to a network delay, packet loss, etc.

The term "RTP port" in underlying disclosure should be understood as a port of a network interface suitable for communication via the RTP protocol.

According to an embodiment, the network interface is configured to send an audio stream corresponding to the video bitstream over the network.

According to an embodiment, the audio stream is sent via a network path with a same or lower congestion level than network paths corresponding to the video sub-bitstreams.

The audio stream or signal comprises relevant information and is important for the continuity of the conference. Audio is used as master in synchronization of audio/video. In a preferred embodiment, the audio stream has a higher priority to be delivered over the network than the video sub-bitstreams.

According to an embodiment, the network interface is configured to send one or more sub-bitstreams of the one or more high priority video sub-bitstreams over the network via one or more ports of the network interface, separate from one or more ports for sending the one or more low priority video sub-bitstreams.

According to an embodiment, sending the one or more sub-bitstreams of the one or more high priority video sub-bitstreams via one or more corresponding network paths with a same or lower congestion level than network paths for the one or more low priority video sub-bitstreams.

This is advantageous as this differentiated quality attribution allows to provide better quality to more prioritized regions and therefore sub-bitstreams, by sending these sub-bitstreams via network paths with lower network congestion. Hereto, e.g. "differentiated services" (DiffServ) could provide differentiated QoS to the network paths. "New RTP payload type" can be issued to identify both types of video sub-bitstreams.

According to an embodiment, multiple sub-bitstreams of the one or more high priority video sub-bitstreams can be aggregated in one sub-bitstream and sent via a separate port of the network interface.

In case of e.g. RTP communication, analysis of RTCP Receiver Reports (RTCP RR) can be used by the quality controller to steer all encoders in a manner that the audio stream, low and high priority sub-bitstreams can be attributed differentiated bandwidths according to the share of total available bandwidth.

According to an embodiment, the detection of low and/or high priority regions is provided by video analysis based on background subtraction, motion estimation, temporal activity and/or saliency estimation.

Indeed, background information often is less important (cfr. low priority regions) to a receiving end-user than moving or salient objects (e.g. head of talking person typically corresponds to a high priority region). In case of H.264 video coding, further use could be made of e.g. H.264 "Motion Estimation" information and/or "Flexible Macroblock Ordering" (FMO) type information.

According to an embodiment, the quality controller is configured to determine a congestion level of a network path to a receiver, wherein the congestion level is dependent on detected data loss, available bandwidth, throughput, latency, network delay and/or network jitter.

Indeed, the congestion level determines the quality of a network path. It is advantageous to follow up on the increase or decrease of data loss, network latency or jitter, in order to adapt the quality of the sub-bitstreams accordingly. In case of e.g. RTP communication, RTCP RR's can be checked each RTT by the quality controller.

According to an embodiment, the quality controller is configured to decrease or increase quality of the one or more high priority video sub-bitstreams respectively based on degrading or improved network congestion, if the quality of the one or more low priority video sub-bitstreams corresponds to a minimum quality.

It is advantageous to first decrease the quality of the low priority video sub-bitstreams with the minimum quality as a lower bound. The minimum quality could amongst others relate to the lowest available encoding level for the sub-bitstreams. Only thereafter, quality can be adapted for the high priority sub-bitstreams.

According to an embodiment, the quality controller is configured to detect movement of the one or more high priority regions and is configured to refrain sending the one or more low priority sub-bitstreams in absence of the detected movement and to send the one or more low priority sub-bitstreams again in case of detected movement of the one or more high priority regions.

Indeed, it is advantageous, for instance, in case of severe network congestion, to refrain from sending video data for the low priority video sub-bitstreams over the network. This provides for a minimum video bitstreaming, whereby e.g. the last known video data for the low priority region(s) (cfr. video frame) could be frozen and maintained to be shown to the end-user, in attendance of improved network connection.

According to an embodiment, sub-bitstreams of multiple high priority video sub-bitstreams and corresponding high priority regions can be attributed a priority order by the analyser and/or by manual input from a user.

Diversity in the attribution of quality to high priority regions is advantageous as it allows more flexibility in adapting quality whereby more quality can be attributed to more prioritized regions and corresponding sub-bitstreams of the resulting video bitstream. In a possible embodiment the manual input comprises a selection of higher priority regions by the user at the receiver side. In an alternative embodiment, sub-bitstreams of multiple high priority video sub-bitstreams and corresponding high priority regions can be attributed a priority order by the networking device or by a receiver.

According to an embodiment, increasing quality of the one or more high priority video sub-bitstreams concerns increasing quality of one or more higher prioritized high priority video sub-bitstreams, or, equally increasing quality of the one or more high priority video sub-bitstreams.

This way, more quality can be attributed to more prioritized regions. Equal increasing of quality of the one or more high priority video sub-bitstreams allows for a quicker restoring of quality with an improved network condition.

According to an embodiment, decreasing quality of the one or more high priority video sub-bitstreams concerns decreasing quality of one or more lower prioritized high priority video sub-bitstreams, or, equally decreasing quality of the one or more high priority video sub-bitstreams.

This way, quality can be maintained a longer period for more prioritized regions. Equal decreasing of quality of the one or more high priority video sub-bitstreams allows for a quicker reduction of quality with a worsened network condition.

According to an embodiment, the networking device further comprises one or more encoders configured to encode video sub-bitstreams, wherein the quality of a video sub-bitstream corresponds to an encoding level of a video sub-bitstream.

Indeed, encoding allows compression of video data and therefore influences the amount of packets to be sent over the network. Typical encoding standards could be e.g. H.264/MPEG-4 AVC, H.264/MPEG-4 SVC, H.265/MPEG-H HEVC, etc. A higher encoding level corresponds to a denser compression with higher susceptibility for visible or distracting artefacts due to noise from the network and hereby deteriorates quality of the video sub-bitstreams.

According to an embodiment, the networking device is configured to provide video bitstreaming to multiple receivers, wherein the networking device is configured to adapt quality of the video sub-bitstreams per receiver, per group of one or more receivers, or, based on the least qualitative network path to one of the multiple receivers,

Adapting the quality for a group of receivers is advantageous as it allows for efficient multicast conferencing or multicast media distribution. The network paths between the network device and the multiple receivers will likely have different characteristics in bandwidth, latency, jitter, etc. In order to accommodate the receivers in the most optimal way, the network device preferably is configured to take into account different receiver requirements and to provide different or several media encodings.

In a second aspect, embodiments of the invention relate to a method for adapting quality of video bitstreaming over a network comprising:
- detecting one or more low priority regions and/or one or more high priority regions in video frames of a video bitstream;
- determining one or more low priority video sub-bitstreams corresponding to the one or more detected low priority regions and/or determining one or more high priority video sub-bitstreams corresponding to the one or more detected high priority regions;
- detecting network congestion;
- decreasing or increasing quality of the one or more low priority video sub-bitstreams depending on respectively degrading or improved network congestion;
- sending the one or more high priority video sub-bitstreams and/or the one or more low priority video sub-bitstreams via one or more network paths over a network to a receiver.

According to an embodiment, the method further comprises:
- decreasing or increasing quality of said one or more high priority video sub-bitstreams respectively based on degrading or improved network congestion, if said quality of said one or more low priority video sub-bitstreams corresponds to a minimum quality.

In a third aspect, the disclosure relates to a computer program product comprising computer-executable instructions for performing the method according to the second aspect when the program is run on a computer.

In a fourth aspect, the disclosure relates to a computer readable storage medium comprising the computer program product according to the third aspect.

In a fifth aspect, the disclosure relates to a data processing system programmed for carrying out the method according to the second aspect.

### Brief Description of the Drawings

Fig. 1 illustrates a networking device according to an embodiment of underlying invention; and
Fig. 2 illustrates steps performed by a quality controller in case of network congestion or early congestion detection according to an embodiment of underlying invention; and
Fig. 3 illustrates steps performed by a quality controller in case of a network recovering from congestion according to an embodiment of underlying invention.

### Detailed Description of Embodiment(s)

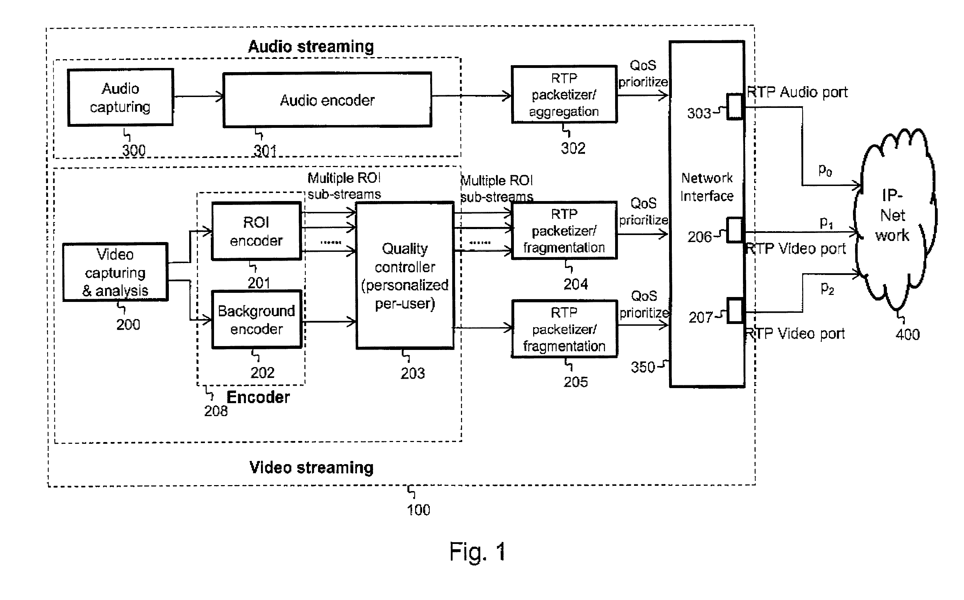

First, Fig. 1 will be described. Fig. 1 illustrates a networking device 100 according to an embodiment of the underlying invention.

A "quality controller" 203 is placed next to two separate video encoders, which process a captured and analyzed video scene, namely, the ROI (regions of interest) encoder 201 and the background (BG) encoder 202. Note that in an alternative embodiment, a single encoder 208 could both encode the ROI and background regions. The background encoder comprises regions that are not of the major interest to the end-user (cfr. low priority). By applying video analysis techniques 200 on a captured video bitstream, such as foreground detection or background subtraction based on temporal activity or saliency measurements, the ROI encoder extracts N (N = 1, 2, 3, ...) objects or regions that are of user's interest (cfr. high priority), and encodes the N ROI's into different layers representing different layers of quality in terms of PSNR, spatial resolution and/or frame rate. When N is larger than one, the ROI encoder 201 considers each ROI sub-bitstream as a separate view that can either be predicted from other views at the same quality layer for enhancing compression performance, or be encoded independently from other ROI sub-bitstreams or views in order to allow for a direct access to a specific ROI. The ROI encoder offers a temporal synchronization of ROI sub-bitstreams by construction. Analogously, the background encoder 202 encodes the static background after ROI extraction into different quality levels for delivery. The quality controller adapts the quality of the ROI and background sub-bitstreams per end-user based on personalized and differentiated QoS. It is more efficient to encode all different qualities once and use a per-user specialized quality controller.

The encoded video sub-bitstreams can be aggregated by an RTP packetizer or fragmentation unit 204 and 205 into common RTP packets, which are forwarded to the network interface 350 of the networking device and delivered through separate RTP video ports 206 and 207 over the IP-network 400. Optionally, streams could also be delivered from a common video RTP port. Alternatively, sub-bitstreams could also be delivered from separate RTP ports, i.e. one port per sub-bitstream. As illustrated in Fig. 1, multiple ROI sub-bitstreams are aggregated and sent via the same RTP port 206, while the background sub-bitstream is sent from a separate RTP port 207. Incoming audio data which is captured by audio capturing unit 300, is encoded by an audio encoder 301, via standards such as G.711, G728, etc. Subsequently, the audio stream can be aggregated by a RTP packetizer or aggregation unit 302 into RTP packets, which is delivered via the separate RTP port 303. Such a configuration allows more flexibility when sending the audio stream, the ROI video sub-bitstream and the background video sub-bitstream.

In the case of availability of differentiated QoS at the sender and receiver, higher QoS will be assigned to the audio stream, mediate QoS to the ROI video sub-bitstream(s) and lowest QoS to the background video sub-bitstream(s), i.e. p₀ < p₁ < p₂, where p₀, p₁ and p₂ indicate the QoS level of the sent bitstream(s) or sub-bitstream(s). A differentiated QoS is provided by delivering the audio stream in a network path with higher QoS, i.e., low-latency and less litter/loss. Alternatively, the ROI and BG sub-bitstreams could be sent in a best-effort way, namely by aggregating the ROI and BG sub-bitstreams and deliver the aggregated stream from the same RTP port. If necessary, the ROI sub-bitstream could be scheduled with a higher priority than the BG sub-bitstream. In this example, the ROI bitstream and BG bitstream shall be transported via separate RTP ports, as shown in Fig. 1.

Generally, upon network congestion detection, e.g. through increasing jitter or packet loss feedback from the RTCP report, the quality controller first lowers the encoding quality of the background (cfr. low priority) sub-bitstream, then the region of interest (cfr. high priority) sub-bitstream. By default, the audio quality shall not be adapted (cfr. highest priority). Optionally, audio quality can be reduced, e.g. in order to accommodate network congestion.

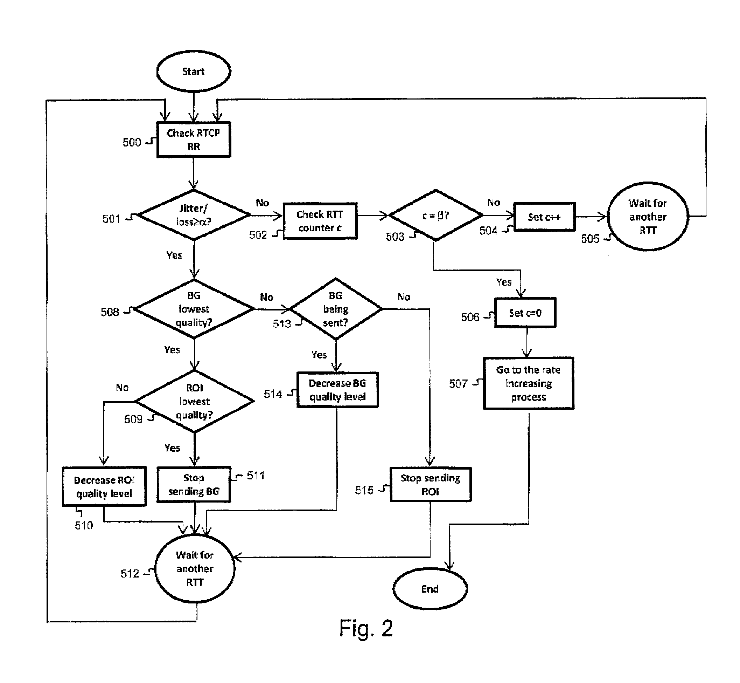

In the following, Fig.2 will be described. Fig. 2 illustrates steps performed by a content-based quality controller 203 in case of network congestion (indicated by packet loss) or early congestion detection (indicated by increasing jitter) according to an embodiment of underlying invention.

The quality or rate controller 203 checks and analyses RTCP receiver reports on a per-user basis. In case of early congestion detection or network congestion, the controller makes a rate-adaptation decision by selecting a proper quality level for the ROI and BG sub-bitstreams for delivery. In this embodiment, the ROI encoder can be implemented using a combination of the Multi-view extension of the H.264/AVC video standard, a.k.a. MVC (MultiView Coding), and the Scalable extension of H.264/AVC video standard, a.k.a. SVC. Each ROI sub-bitstream is given a view id, as well as metadata describing the position of the ROI into the total frame in normalized coordinates. Hereby they can be recomputed when the BG resolution is known at the receiver or decoder side. Each ROI sub-bitstream is also scalably encoded into multiple layers. The background encoder can be implemented using SVC, where the base layer corresponds to a down-sampled version of the total frame. A detailed explanation of the functionality of the quality controller will be explained as follows.

Upon receiving an RTCP receiver report (RR), the quality controller checks in step 500 whether jitter or packet loss occurred (checked by step 501) along the network path whereby the BG and ROI sub-bitstreams are delivered. If jitter/packet loss exceeds a threshold α, the controller decides to lower the quality level to be delivered of the BG or ROI sub-bitstreams accordingly. The controller 203 may also decide not to send (step 511 and 515) the BG or the ROI sub-bitstreams, but only keep sending the audio stream in case of severe network congestion.

For example, in case of jitter (or packet loss) detection from an end-user, the quality controller checks in step 508 whether the BG sub-bitstream is sent with the lowest quality layer. Note that Fig. 2 illustrates the example where one ROI and one BG sub-bitstream is sent. In case of multiple ROI sub-bitstreams, quality adaptation is determined on a per-user and per-ROI basis (by adding more ROI blocks and determine the importance of each ROI).

If the BG sub-bitstream is not sent with the lowest quality layer, the controller checks in step 513 if the BG sub-bitstream is sent. If so, the quality controller decreases in step 514 the quality level of the BG sub-bitstream.

If the BG sub-bitstream is sent with the lowest quality layer, the same check is performed on the ROI sub-bitstream in step 509. If the ROI sub-bitstream is also sent with the lowest quality level in the previous RTT, the controller stops sending the BG sub-bitstream as indicated by step 511. After waiting for another RTT in step 512, the controller returns to step 500 and checks the RTCP RR again. If the network condition keeps degrading or maintains the same, it stops sending the ROI bitstream in step 515. A freezing ROI frame is observed at the receiver. Stop sending the audio stream shall never occur. Possibly, an end-user is able to determine only to decode a ROI substream and view it in full screen or to decode all BG and ROI substreams so as to recompose the total video scene.

If no jitter or packet loss is detected in the current RTT, the controller in step 502 checks the current counter c and subsequently checks whether c exceeds the threshold β in step 503. The threshold β (β = 0, 1, 2,...) is configured depending on how conservative the quality controller is to set current counter c back to zero in step 506 and to switch to the rate or quality increasing process in step 507. While c is lower than β, c is incremented in step 504 and the controller waits for another RTT in step 505.

Note that the jitter or packet loss checking process is performed through comparison with the threshold α in step 501, which is an application dependent parameter. It is the choice of a specific application to configure α so as to reflect its tolerance to packet loss or jitter before adapting the sending bit-rate. For instance, αₗₒₛₛ=0.01 means that rate adaptation will be performed only when the packet loss rate is larger than 0.01.

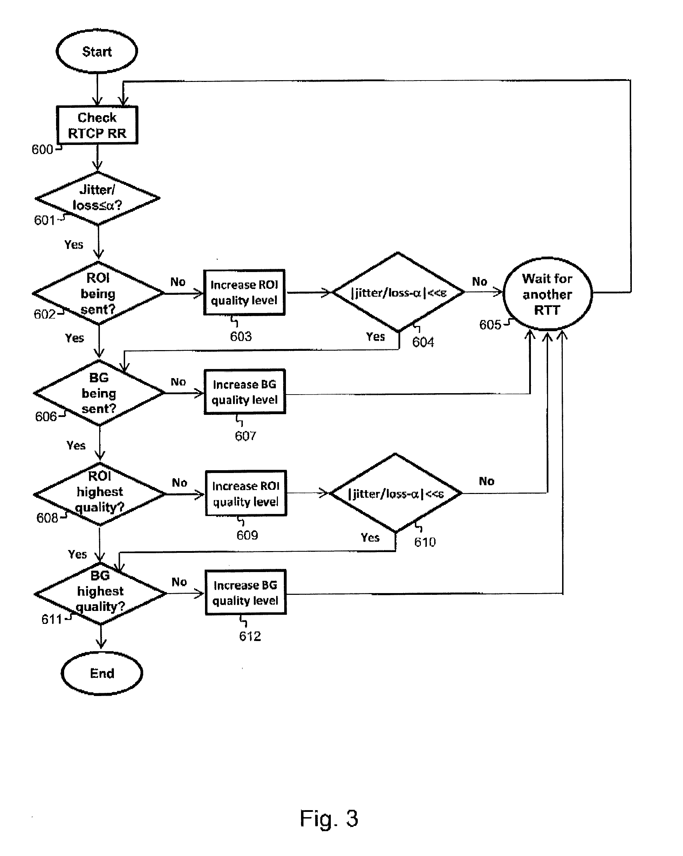

In the following, Fig.3 will be described. Fig. 3 illustrates steps performed by a content-based quality controller 203 in case of a network recovering from congestion according to an embodiment of underlying invention.

Note that Fig. 3 illustrates the example where one ROI and one BG sub-bitstream is sent. Fig. 3 details the mechanism of content-based quality adaptation when the network recovers from congestion. Once the network condition improves (indicated by decreasing jitter or packet loss rate), the network device (decision made by the quality controller) first increases the quality of ROI sub-bitstream. The BG sub-bitstream is delivered with enhancement quality afterwards when possible. Analogous as in Fig. 2, the threshold α is an application dependent parameter. For instance, αₗₒₛₛ=0 means that rate-adaption will only be performed if no packet loss is detected along the network path whereby video content is delivered.

It is assumed that the controller detects improving network condition, and decides to enhance the video quality. Upon receiving an RTCP receiver report (RR), the quality controller checks in step 600 whether jitter or packet loss occurred in step 601 along the network path whereby the BG and ROI sub-bitstreams are delivered. If the ROI sub-bitstream has not been sent in the previous RTT (checked in step 602), the ROI quality level shall be increased in step 603. Depending on the current network condition, the sender may increase the BG quality level in the same RTT. This operation is performed by evaluating the relative difference of the current jitter/packet loss with threshold α in step 604. Note that ε is a pre-defined application dependent parameter. It determines whether the network condition is sufficient to accommodate enhancement of the BG in the same RTT. A network device may be greedy in rate increment, by assigning a small value to ε; or more reserved in adapting the bit-rate, by assigning a larger value to ε. A value for the relative difference larger than ε leads to waiting for another RTT in step 605.

Following the flowchart in Fig. 3, if the network device 100 was sending the ROI sub-bitstream in the previous RTT (checked in step 602), the quality controller checks in step 606 if the BG sub-bitstream has been sent in the previous RTT. If not, it shall issue the enhancement of the BG quality in step 607. By doing so, the network device guarantees that the receiver can at least receive the basic quality level of the ROI and BG sub-bitstream.

If the BG sub-bitstream has been sent, the controller checks in step 608 if the ROI sub-bitstream is previously sent with the highest quality. If not, the ROI quality level is increased in step 609. Again the relative difference of the current jitter/packet loss with threshold α is evaluated in step 610 in order to wait in step 605 for another RTT or check if the background sub-bitstream was previously sent with the highest quality in step 611. If not, quality for the BG sub-bitstream is increased in step 612.

If the network condition keeps improving, the network device shall increase the quality level of the ROI and BG sub-bitstreams by each RTT round, or in the same RTT, depending on the current network condition.

According to an embodiment of the underlying invention, the networking device is configured to provide video bitstreaming to multiple receivers.

Possible examples of settings for the network device comprise:
a. Content-based rate adaption per receiver
   - 1 Audio/ROI/BG encoding setting per receiver.
   - Specific encoding of the different bitstreams (Audio/ROI/BG) at sender side towards receivers. E.g. in case of 2 receivers, ROI and BG sub-bitstreams to each receiver could be encoded with 2 different encoding settings. Optionally, optimization is provided to reduce the number of encodings at sender side.
b. Content-based rate adaption on a minimum basis
   - 1 Audio/ROI/BG encoding setting for all receivers.
   - The communication path information of the different receivers is minimized and the sender will only use the "worst" settings to determine the encodings of Audio/ROI/BG bitstreams.
   - This example limits the number of encodings at sender side together with lesser QoS drawback.
c. Content-based rate adaption on a discrete base wrt transport path QoS:
   - Audio/ROI/BG encoding setting per group of receivers.
   - In the example a above and in case of many receivers, the amount of encodings at sender side could become too numerous for hardware to deal with.
   - In order to support all the receivers with their different communication path settings, the network device determines to group receivers based on their reported communication path settings. A common Audio/ROI/BG encoding will be performed for the entire group. The number of groups directly relates to the number of encodings that needs to be done at sender side.

Optionally, the network device decides to further combine different encoding tasks, e.g. encoding audio once and use the audio encoding for all receivers.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. It is to be understood that the terms so used are interchangeable under appropriate circumstances and embodiments of the invention are capable of operating according to the present invention in other sequences, or in orientations different from the one(s) described or illustrated above.

## Claims

1. A networking device (100) for adapting quality of video bitstreaming over a network (400), said networking device (100) comprising:
- an analyser (200) configured to detect one or more low priority regions and/or one or more high priority regions in video frames of a video bitstream, wherein said analyser (200) is configured to determine one or more low priority video sub-bitstreams corresponding to said one or more detected low priority regions and/or to determine one or more high priority video sub-bitstreams corresponding to said one or more detected high priority regions;
- a quality controller (203) configured to detect network congestion and configured to decrease or increase quality of said one or more low priority video sub-bitstreams depending on respectively degrading or improved network congestion;
- a network interface (350) for sending said one or more high priority video sub-bitstreams and/or said one or more low priority video sub-bitstreams via one or more network paths over a network (400) to a receiver.

2. A networking device (100) according to claim 1, wherein said network interface (350) is configured to send an audio stream corresponding to said video bitstream over said network (400), via a network path with a same or lower congestion level than network paths corresponding to said video sub-bitstreams.

3. A networking device (100) according to claim 1, wherein said network interface (350) is configured to send one or more sub-bitstreams of said one or more high priority video sub-bitstreams over said network (400) via one or more ports (206) of said network interface (350), separate from one or more ports (206) for sending said one or more low priority video sub-bitstreams, sending said one or more sub-bitstreams of said one or more high priority video sub-bitstreams via one or more corresponding network paths with a same or lower congestion level than network paths for said one or more low priority video sub-bitstreams.

4. A networking device (100) according to claim 1, wherein said detection of low and/or high priority regions is provided by video analysis (200) based on background subtraction, motion estimation, temporal activity and/or saliency estimation.

5. A networking device (100) according to claim 1, wherein said quality controller (203) is configured to determine a congestion level of a network path to a receiver, wherein said congestion level is dependent on detected data loss, available bandwidth, throughput, latency, network delay and/or network jitter.

6. A networking device (100) according to claim 1, wherein said quality controller (203) is configured to decrease or increase quality of said one or more high priority video sub-bitstreams respectively based on degrading or improved network congestion, if said quality of said one or more low priority video sub-bitstreams corresponds to a minimum quality.

7. A networking device (100) according to claim 1, wherein sub-bitstreams of multiple high priority video sub-bitstreams and corresponding high priority regions can be attributed a priority order by said analyser (200) and/or by manual input from a user.

8. A networking device (100) according to claim 7, wherein increasing quality of said one or more high priority video sub-bitstreams concerns increasing quality of one or more higher prioritized high priority video sub-bitstreams, or, equally increasing quality of said one or more high priority video sub-bitstreams.

9. A networking device (100) according to claim 7, wherein decreasing quality of said one or more high priority video sub-bitstreams concerns decreasing quality of one or more lower prioritized high priority video sub-bitstreams, or, equally decreasing quality of said one or more high priority video sub-bitstreams.

10. A networking device (100) according to claim 1, wherein said networking device further comprises one or more encoders (201, 202) configured to encode video sub-bitstreams, wherein said quality of a video sub-bitstream corresponds to an encoding level of a video sub-bitstream.

11. A networking device (100) according to claim 1, wherein said networking device (100) is configured to provide video bitstreaming to multiple receivers, wherein said networking device (100) is configured to adapt quality of said video sub-bitstreams per receiver, per group of one or more receivers, or, based on the least qualitative network path to one of said multiple receivers.

12. A method for adapting quality of video bitstreaming over a network (400) comprising:
- detecting one or more low priority regions and/or one or more high priority regions in video frames of a video bitstream;
- determining one or more low priority video sub-bitstreams corresponding to said one or more detected low priority regions and/or determining one or more high priority video sub-bitstreams corresponding to said one or more detected high priority regions;
- detecting network congestion;
- decreasing or increasing quality of said one or more low priority video sub-bitstreams depending on respectively degrading or improved network congestion;
- sending said one or more high priority video sub-bitstreams and/or said one or more low priority video sub-bitstreams via one or more network paths over a network (400) to a receiver.

13. A computer program product comprising computer-executable instructions for performing the method according to claim 12 when the program is run on a computer.

14. A computer readable storage medium comprising the computer program product according to claim 13.

15. A data processing system programmed for carrying out the method according to claim 12.
